# EUROPEAN PATENT APPLICATION

(11) **EP 2 532 843 A1**
(43) Date of publication of application: **12.12.2012**
(21) Application number: 11169311.5
(22) Date of filing: 09.06.2011
(51) Int. Cl.: F01K 3/12, F28D 20/02, F01K 9/00, F01K 11/04, F01K 3/00, F01K 25/10

(54) **Thermoelectric energy storage system with an evaporative ice storage arrangement and method for storing thermoelectric energy**

(71) Applicant: ABB Research Ltd., 8050 Zürich (CH)
(72) Inventor: Hemrle, Jaroslav, 5405 Baden-Dättwil (CH); Kaufmann, Lilian, 5413 Birmenstorf (CH); Mercangoez, Mehmet, 5405 Baden-Dättwil (CH); Z'Graggen, Andreas, 8004 Zürich (CH)
(74) Representative: ABB Patent Attorneys

(57) **Abstract**

A system and method for thermoelectric energy storage is described. The system has a charging cycle (10) for providing thermal energy to a hot thermal storage arrangement (18, 20, 22) and an evaporative ice storage arrangement (24) and a discharging cycle (30) for generating electricity by retrieving the thermal energy. The evaporative ice storage arrangement (24) comprises a heat exchanger (14, 36), an ice slurry storage tank (26), a vacuum evaporation chamber (28) and a slurry heat exchanger (40). The evaporative ice storage arrangement (24) of the present invention functions as a dedicated cold storage for the thermoelectric energy storage system. The cold storage is realized by producing an ice-water mixture during charging of the storage, and using the stored ice-water mixture to condense the working fluid during the discharge cycle (30). Use of this sub-triple-point evaporation arrangement functions to increase the round-trip efficiency of the TEES system through minimising the maximum temperature difference between the working fluid and the thermal storage medium during operating cycles.

## Description

### FIELD OF THE INVENTION

The present invention relates generally to thermoelectric energy storage. It relates in particular to a system and method for storing thermal energy on the cold side of a thermoelectric energy storage system using an evaporative ice storage arrangement.

### BACKGROUND OF THE INVENTION

Storage systems for cold or ice are valuable in many industries and applications. Various ice making methods are known, such as scraped ice production, supercooled ice production and evaporative ice making. In evaporative ice making systems, a compressor is used to increase the pressure of the resulting water vapor, leading to a super-triple point condensation process. The water vapor is at saturation conditions and therefore the increased saturation pressure also increases the saturation temperature. If the saturation temperature becomes high enough, the vapor can be condensed at above 0°C as liquid water and can easily be removed from the system. Such a super-triple point condensation process may be useful for applications requiring continuous ice production. However, known super-triple point evaporation systems are not suitable for certain industrial applications because the size of the compressor limits the capacity of the evaporative ice making system to approximately 3 to 5 MW thermal duty. Such thermal duty is too small for many commercially-viable, industrial applications.

An alternative ice production method is based on the desublimation of vapor (ice formation) at a condenser surface. Disadvantageously, such ice accumulation on heat exchange surfaces results in a deterioration of the heat transfer.

An example of an industrial application in which a cold storage feature may be used, is a transcritical thermoelectric energy storage (TEES) system, as described by the applicant in an earlier patent application EP 2157317. Such a TEES system converts excess electricity to heat in a charging cycle, stores the heat, and converts the heat back to electricity in a discharging cycle, when required. Such an energy storage system is robust, compact, site independent and is suited to the storage of electrical energy in large amounts. Thermal energy can be stored in the form of sensible heat via a change in temperature or in the form of latent heat via a change of phase or a combination of both.

The round-trip efficiency of an electrical energy storage system can be defined as the percentage of electrical energy that can be discharged from the storage in comparison to the electrical energy used to charge the storage, provided that the state of the energy storage system after discharging returns to its initial condition before charging of the storage. The efficiency of thermoelectric energy storage is limited for various reasons rooted in the second law of thermodynamics. Firstly, the conversion of heat to mechanical work in a heat engine is limited to the Carnot efficiency. Secondly, the coefficient of performance of any heat pump declines with increased difference between input and output temperature levels. Thirdly, any heat flow from a working fluid to a thermal storage and vice versa requires a temperature difference in order to happen. This fact inevitably degrades the temperature level and thus the capability of the heat to do work.

It is established that a thermodynamic irreversibility factor is the transfer of heat over large temperature differences. A relatively large maximum temperature difference between the thermal storage medium and the working fluid (whether charging or discharging) reduces the roundtrip efficiency. In order to minimize this maximum temperature difference, relatively large heat exchangers could be constructed or phase change materials can be used for thermal storage. Problematically, these solutions result in a high capital cost and therefore are not generally practical.

On the hot side of a TEES cycle, the temperature difference between the thermal storage medium and the working fluid may be reduced using intermediate thermal storage tanks as described in the applicant's earlier patent application EP 2275649.

Thus, there is a need to provide an efficient latent heat storage system such as an ice production and storage system which may be used, inter alia, in combination with the cold side of a TEES system to minimize the maximum temperature difference. The ice production and storage system preferably having relatively small temperature approaches, low parasitic losses and convenient scalability. Such factors would also enable the TEES system to have a higher round-trip efficiency.

### DESCRIPTION OF THE INVENTION

It is an objective of the invention to provide a thermoelectric energy storage system for converting electrical energy into thermal energy to be stored and converted back to electrical energy with an improved round-trip efficiency. This objective is achieved by a thermoelectric energy storage system having an evaporative ice storage arrangement according to claim 1 and a method according to claim 8. Preferred embodiments are evident from the dependent claims.

According to a first aspect of the invention, a thermoelectric energy storage system is provided which has a charging cycle for providing thermal energy to a hot thermal storage arrangement and an evaporative ice storage arrangement, and a discharging cycle for generating electricity by retrieving the thermal energy from the hot thermal storage arrangement and the evaporative ice storage arrangement. The thermoelectric energy storage system comprises a working fluid circuit adapted to circulate a working fluid through the hot thermal storage arrangement and the evaporative ice storage arrangement. The evaporative ice storage arrangement comprises a heat exchanger coupled to an cold slurry storage tank via a cold thermal storage medium circuit, wherein in the charging cycle system, the heat exchanger is adapted to function as a desublimation evaporator, and an evaporation chamber is coupled between said desublimation evaporator and the cold slurry storage tank in the cold thermal storage medium circuit. In the discharging cycle system, the heat exchanger is adapted to function as a condenser, and the cold slurry storage tank is connected to said condenser via the cold thermal storage medium circuit. (The evaporative ice storage arrangement of the present invention is also descriptively referred to herein as sub-triple-point evaporation arrangement.)

Thus, it is understood that where the sub-triple-point evaporation arrangement operates in connection with a standard TEES system, then ice is produced in the sub-triple-point evaporation arrangement during the TEES charging cycle (via working fluid evaporation), while ice would be consumed during the TEES discharging cycle (via working fluid condensation).

Utilisation of the sub-triple-point evaporation arrangement (also referred to herein as the evaporative ice storage arrangement) of the present invention is highly advantageous for the transcritical TEES system because relatively small approach temperatures are achievable.

In a preferred embodiment, a further heat exchanger positioned in the cold thermal storage medium circuit at the outlet of said condenser and an inlet of the cold slurry storage tank in the discharging cycle system.

In an alternative embodiment, the heat exchanger and the cold slurry storage tank are directly coupled together in both the charging cycle system and the discharging cycle system.

In the present invention, the cold thermal storage medium may be water or a mixture of water and at least one further component. The vacuum evaporation chamber comprises a spraying device adapted to spray the cold thermal storage medium into the chamber where triple point conditions are maintained.

A disadvantage associated with known ice production through desublimation of vapor at a condenser surface is that ice accumulation on heat exchange surfaces results in a deterioration of the heat transfer coefficient. However, the present invention overcomes this problem.

Specifically, in a preferred embodiment, the heat exchanger comprises a housing containing cooling conduits and the evaporative ice storage arrangement includes a periodically activated means to defrost ice from the conduits in the heat exchanger in the charging cycle system.

In a second aspect of the present invention a method is provided for storing and retrieving electrical energy in a thermoelectric energy storage system having a hot side and a cold side. The method comprising charging the system by transferring thermal energy to a hot thermal storage medium on the hot side and to a cold thermal storage medium on the cold side, and discharging the system by retrieving thermal energy from the hot thermal storage medium and the cold thermal storage medium and transforming the thermal energy into electrical energy via mechanical energy. The step of transferring thermal energy to the cold thermal storage medium comprises forming ice through desublimation evaporation in an evaporative ice storage arrangement. The step of retrieving thermal energy from the cold thermal storage medium comprises melting the ice through condensation in the evaporative ice storage arrangement.

Advantageously, exchanging latent heat with ice allows for relatively compact cold storage and relatively small mass flows when compared with sensible-heat water storages. Thus, the footprint of the TEES system is reduced when connected to the evaporative ice storage of the present invention.

In a preferred embodiment, the step of forming ice through desublimation evaporation in an evaporative ice storage arrangement includes periodically defrosting ice from the conduits in the heat exchanger.

The working fluid is preferably carbon dioxide (CO₂), or may comprise ammonia (NH₃) and/or an organic fluid (such as methane, propane or butane) and/or a refrigerant fluid (such as R 134a (1,1,1,2-Tetrafluoroethane), R245 fa (1,1,1,3,3-Pentafluoropropane)).

Advantageously, the evaporative ice storage technology of the present invention can be used in various commercial applications for energy efficiency improvements and load leveling, especially for processes with periodical switching between ice production and ice melting. Examples include air conditioning and district cooling as well as gas turbine air inlet cooling, in which ice could be generated during nighttime and consumed during daytime. It is also envisaged that other applications without such periodical switching could also benefit from the present invention; for example, in food processing applications or in mine cooling.

Further advantage is gained in that the instant invention does not require a compressor to function and therefore the high costs and space requirements associated with compressors are avoided.

If technically possible but not explicitly mentioned, also combinations of embodiments of the invention described in the above and in the following may be embodiments of the method and the system. These and other aspects of the invention will be apparent from and elucidated with reference to the embodiments described hereinafter.

### BRIEF DESCRIPTION OF THE DRAWINGS

The subject matter of the invention will be explained in more detail in the following text with reference to preferred exemplary embodiments, which are illustrated in the attached drawings, in which:
Figure 1 shows a simplified schematic diagram of a charging cycle of a thermoelectric energy storage system of the present invention having an evaporative ice storage arrangement;
Figure 2a shows a simplified schematic diagram of a discharging cycle of a thermoelectric energy storage system of the present invention having an evaporative ice storage arrangement;
Figure 2b shows a simplified schematic diagram of an alternative embodiment of a discharging cycle of a thermoelectric energy storage system of the present invention having an evaporative ice storage arrangement;
Figure 3 shows an ideal entropy-temperature diagram of the cycles in a transcritical TEES system;
Figure 4 shows an entropy-temperature diagram of the cycles in a transcritical TEES system using real mechanical components (turbo machines) and the evaporative ice storage arrangement of the present invention with very small approach temperatures between I and II.

For consistency, the same reference numerals are used to denote similar elements illustrated throughout the figures.

### DETAILED DESCRIPTION OF PREFERRED EMBODIMENTS

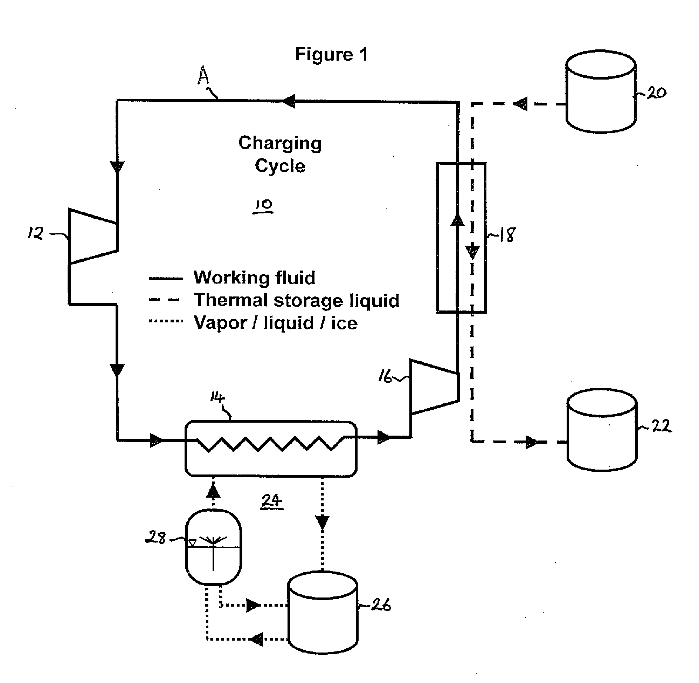

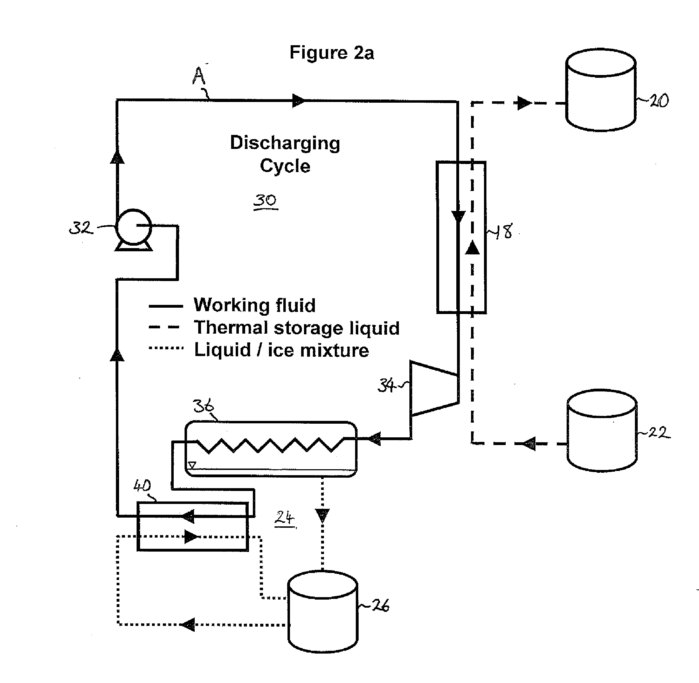

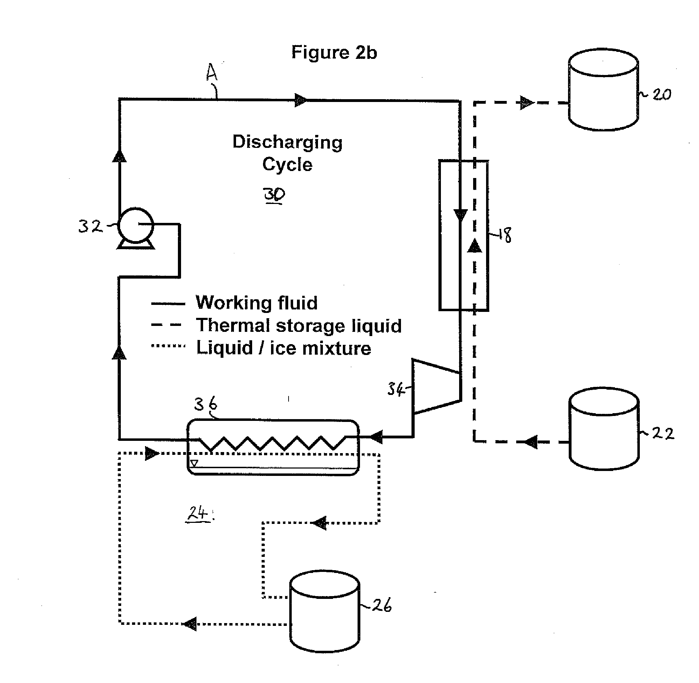

Figures 1 and 2 schematically depict a charging cycle system and a discharging cycle system, respectively, of a sub-triple-point evaporation arrangement in accordance with an embodiment of the present invention, when connected to a TEES system.

The charging cycle system 10 shown in Figure 1 comprises a working fluid circuit of a work recovering expander 12, an evaporator 14, a compressor 16 and a heat exchanger 18. A working fluid circulates through these components as indicated by the solid line with arrows in Figure 1. The system further comprises a cold-fluid storage tank 20 and a hot-fluid storage tank 22 containing a fluid thermal storage medium, coupled together via the heat exchanger 18. The thermal storage medium flows between these components as indicated by the dashed line with arrows in Figure 1. The system includes a sub-triple-point evaporation arrangement 24 comprising an ice slurry storage tank 26 and a vacuum evaporator chamber 28 and the evaporator 14. Water, in various states, circulates through the components of the sub-triple-point evaporation arrangement 24. The circulation of the water is indicated by the dotted line with arrows in Figure 1 (although the direct connection between the evaporator 14 and the ice slurry storage tank 26 is an optional feature).

In operation, the charging cycle system 10 performs a transcritical cycle and the working fluid flows around the TEES system in the following manner. The working fluid in the evaporator 14 absorbs heat from the sub-triple-point evaporation arrangement 24 and evaporates. The vaporized working fluid is circulated to the compressor 16 and surplus electrical energy is utilized to compress and heat the working fluid to a supercritical state. (In such a supercritical state, the fluid is above the critical temperature and critical pressure.) The working fluid is fed through the heat exchanger 18 where the working fluid discards heat energy into the thermal storage medium.

It is noted that in the heat exchanger 18 the working fluid pressure will be above the critical pressure, however the working fluid temperature may go below the critical temperature. Therefore, whilst the working fluid enters the heat exchanger 18 in a supercritical state, it may leave the heat exchanger 18 in a subcritical state. A transcritical cycle is defined as a thermodynamic cycle where the working fluid goes through both subcritical and supercritical states. There is no distinction between a gas phase and a vapor phase beyond the supercritical pressure and therefore there is no evaporation or boiling (in the regular meaning) in the transcritical cycle.

The compressed working fluid exits the heat exchanger 18 and enters the work recovering expander 12. Here the working fluid is expanded to the lower pressure of the evaporator 14. The working fluid flows from the expander 12 back into the evaporator 18.

The thermal storage medium is pumped from the cold-fluid storage tank 20 through the heat exchanger 18 to the hot-fluid storage tank 22. The heat energy discarded from the working fluid into the thermal storage medium is stored in the form of sensible heat.

In operation, the sub-triple-point evaporation arrangement 24 functions in the following manner during the charging cycle. Water in liquid form is sprayed into the vacuum evaporation chamber 28 to significantly enhance the evaporation surface. Triple point conditions are maintained in the chamber and so part of the water droplets evaporate and consequently another part of the water droplets freeze to form ice in the evaporation chamber 28 as ice/water slurry (the ratio of water mass evaporated to frozen water is approximately 1 to 7.). The ice produced in the vacuum evaporation chamber 28 is pumped to the ice slurry storage tank 26 (also referred to herein as the cold slurry storage tank). The water vapor produced in the vacuum evaporation chamber 28 flows into the evaporator 14 and deposits (or "desublimates") on the evaporator surfaces as ice.

The evaporator comprises a housing containing cooling conduits. As described above, the water vapor in the evaporator 14 is deposited on the surface of the cooling conduits, forming a layer of ice. The character of the deposited ice can range from layer of solid ice through to mushy ice, dependent upon factors such as the material of the conduits, the supercooling of the wall, and so forth. The dimensions of the evaporator 14 are adapted to allow optimal removal of the heat from the sub-triple-point evaporation arrangement by evaporation of the working fluid passing through or flowing around the cooling conduits.

The discharging cycle system 30 shown in Figure 2a comprises a working fluid circuit of a pump 32, a heat exchanger 18, a turbine 34, and a condenser 36. A working fluid circulates through these components as indicated by the solid line with arrows in Figure 2a. The system further comprises a cold-fluid storage tank 20 and a hot-fluid storage tank 22 containing a fluid thermal storage medium coupled together via the heat exchanger 18. The thermal storage medium flows between these components as indicated by the dashed line with arrows in Figure 2a. The system also includes a sub-triple-point evaporation arrangement 24 comprising an ice slurry storage tank 26, a slurry heat exchanger 40 and the condenser 36. Water, in various states, circulates through the components of the sub-triple-point evaporation arrangement 24 and through the condenser 36. The circulation of the water is indicated by the dotted line with arrows in Figure 2a.

In operation, the discharging cycle system also performs a transcritical cycle and the working fluid flows around the TEES system in the following manner. Heat energy is transferred from the thermal storage medium to the working fluid causing the working fluid to go through transcritical heating. The working fluid then exits the heat exchanger 18 in a supercritical state and enters the turbine 34 where the working fluid is expanded thereby causing the turbine 34 to generate electrical energy. Next, the working fluid passes through the condenser 36 and subsequently the slurry heat exchanger 40, where the working fluid is condensed by exchanging heat energy with the sub-triple-point evaporation arrangement 24. The condensed working fluid exits the sub-triple-point evaporation arrangement 24 via an outlet and is pumped again beyond its critical pressure into the heat exchanger 18 via the pump 32.

During the discharging cycle, the sub-triple-point evaporation arrangement 24 functions in the following manner. Initially, the working fluid in gas phase enters the condenser 36 and increases the temperature in the condenser 36 as it condenses. This partially melts the ice built up on the cooling conduits during the charging cycle causing it to drop off the conduits and it is transferred to the ice slurry storage tank 26. Both the ice slurry and the working fluid after exiting the condenser 36 may be subsequently circulated through the slurry heat exchanger 40 where the temperature of the working fluid is reduced thereby condensing the remaining working fluid vapor and consequently ice in the slurry is subsequently melted.

Figure 2b illustrates an alternative discharging cycle system which similarly comprises a working fluid circuit of a pump 32, a heat exchanger 18, a turbine 34 and a condenser 36. However, in this embodiment a separate slurry heat exchanger is not required, as the function of the slurry heat exchanger is performed by directing the water circuit through the condenser. The further features of this alternative discharging cycle system are identical to those described in respect of Figure 2a.

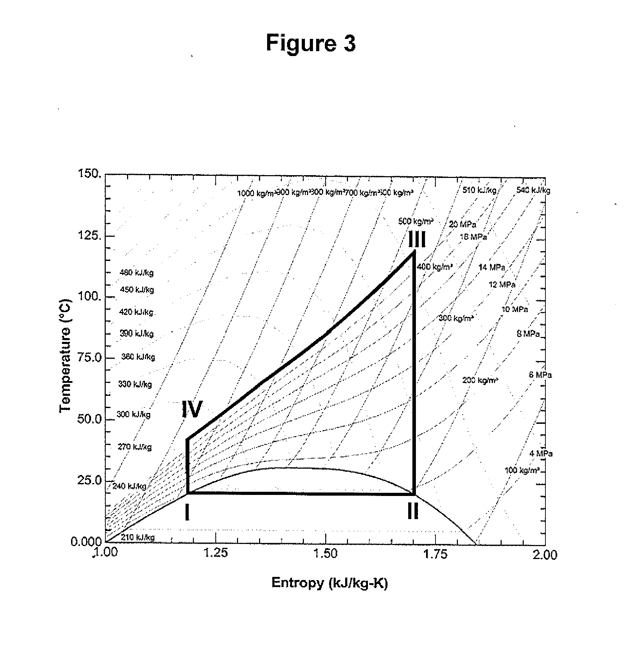

The solid-line quadrangle shown in the entropy-temperature diagram of Figure 3 represents both the ideal charging and ideal discharging cycles of a standard transcritical TEES system in which on the cold side latent heat is exchanged with the surroundings at ambient temperature. Specifically, the charging cycle, as illustrated, follows a counter-clockwise direction and the transcritical discharging cycle follows a clockwise direction. The working fluid is assumed to be carbon dioxide for this exemplary embodiment. In this diagram, latent heat exchange at constant temperature with increasing entropy between point I and point II can clearly be seen and also isentropic compression and expansion with increasing temperature between point II and point III can be seen for charging and discharging, respectively. In the exemplary embodiment shown in Figure 3, the entropy of the working fluid falls from 1.70 KJ/kg-K to 1.20 KJ/kg-K during the transcritical cooling by sensible heat exchange between point III, at 120°C, and point IV, at 42°C, in the charging cycle. The transition between point IV and point I occurs with a change in temperature and isentropic compression and expansion for discharging and charging, respectively.

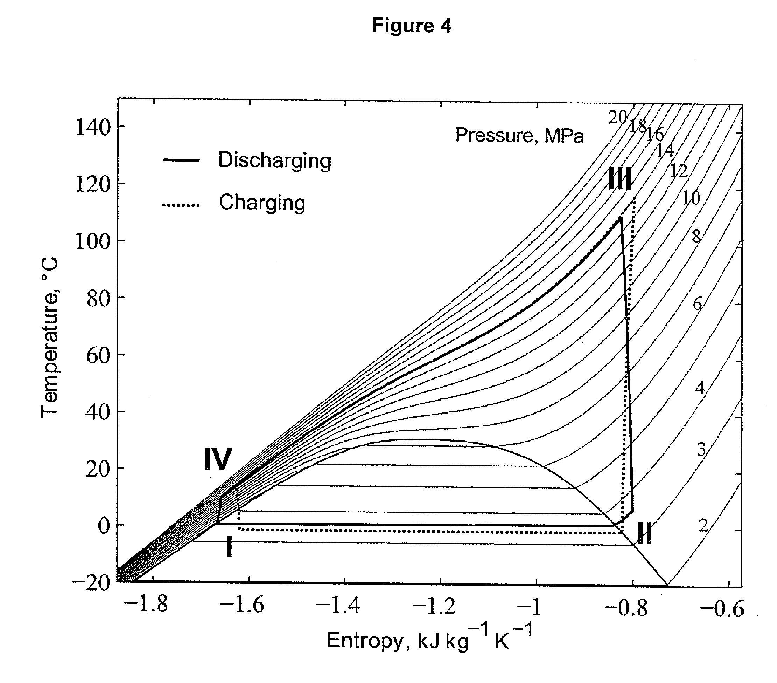

Figure 4 shows an entropy-temperature diagram of the charging and discharging cycles in a transcritical TEES system using the sub-triple-point evaporation arrangement 24 of the present invention. The charging cycle is indicated by a dotted line and follows a counter-clockwise direction and the discharging cycle is indicated by a solid line and follows a clockwise direction. The working fluid is assumed to be carbon dioxide for this exemplary embodiment. Latent heat exchange at constant temperature with increasing entropy between point I and point II can clearly be seen. During the charging cycle heat is transferred from the cold storage fluid at 0°C to the working fluid at -°2 C. Inversely, during discharging heat is transferred from the working fluid at 1°C to the cold storage fluid at 0°C. Point I and point II in Figure 4 can be equated with the working fluid passing through the evaporator 14 in Figure 1 and the condenser 36 in Figures 2a and 2b.

Polytropic compression and expansion with increasing temperature between point II and point III can be seen for charging and discharging, respectively. As a consequence of thermodynamic irreversibilities, such as non zero approach temperatures in the heat exchangers and non isentropic compression and expansion in the turbomachines, the charging cycle and discharging cycle follow differing entropy-temperature paths. In the exemplary embodiment shown in Figure 4, the entropy of the working fluid falls from -0.8 KJ/kg-K to -1.6 KJ/kg-K during the transcritical cooling by sensible heat exchange between point III, at 120°C, and point IV, at 12°C, in the charging cycle. The transition between point IV and point I occurs with a change in temperature and polytropic compression and expansion for discharging and charging, respectively. Point IV in Figure 4 can be equated with the working fluid passing through section A of the working fluid circuit in Figures 1, 2a and 2b. Thus, it will be clear to the skilled person that the heat transfer on the cold side heat exchanger is isothermal. Importantly, the sub-triple-point evaporation arrangement can be run at small approach temperatures due to latent heat exchange with ice on the cold side of the TEES and thus the sub-triple-point evaporation arrangement of the present invention has greater efficiency than a system exchanging sensible heat on the cold side, e.g. with a cold river.

The relative size of the evaporator component 14 in the charging cycle system (and equivalently the condenser component 36 in the discharging cycle) is an important factor in the efficient functioning of the sub-triple-point evaporation arrangement. Specifically, the surface area of the cooling conduits in the desublimation evaporator 14 are sized so that it balances well the power duty requirement, allowing enough surface area to limit the ice thickness. The deposition heat transfer conditions of the evaporator 14 are such that the thermal resistance is dominated typically by the ice layer depositing on the condenser tube surface. Thus, the deposition heat transfer is mitigated where the layer becomes thicker than about 3 mm, although the evaporator component performance is still acceptable even where the ice layer thickness is 10 mm. For example, in an exemplary sub-triple-point evaporation arrangement 24 having an ice making duty of 10 MW thermal and cooling conduits of 10mm outer diameter, an ice layer of 7.5mm thickness may be built up after 8 hours charging cycle.

It will be clear to those skilled in the art that as the ice layer builds on the cooling conduits in the desublimation evaporator 14, the overall power of the ice production is reduced with time. To maintain constant ice making duty, the spraying of water in the vacuum evaporation chamber 28 can be used to control the conditions in such a way that continuous duty is achieved during the whole charging cycle. For example, at the beginning of a charging cycle, when there is little or no ice deposition built up on the cooling conduits, the mass flow of water sprayed in the vacuum evaporation chamber 28 can be at a relatively lower level and then gradually increased to maintain a constant overall heat transfer coefficient of the whole charging cycle as the ice build-up gradually reduces the heat transfer.

In an alternative embodiment, the arrangement 24 can be adapted such that a relatively small quantity of a dilute solution of highly water soluble inorganic salts is sprayed in the evaporator 14 over the cooling conduits. The resulting ice morphology is softer and more powdery in nature. Such ice may drop from the cooling conduits under its own weight down to the base of the evaporator housing where an outlet pipe may be located or such ice may be periodically "washed down" from the cooling conduits using pressure washer ports.

In a further alternative embodiment, additional warmer working fluid is periodically injected into the cooling conduits in the evaporator 14 during charging which causes the ice built up to melt. Where the sub-triple-point evaporation arrangement is part of a TEES system, such defrosting may only be required every 2 or 3 hours. In such an embodiment, several evaporator modules connected in parallel to the evaporation chamber can be used to ensure continuous operation of the charging cycle because even as the ice is melted in one of the evaporator modules, ice production is ongoing in the other modules. Advantageously, in such an embodiment, the evaporator dimensions can be smaller than those of the main embodiment described herein.

In an alternative embodiment of the present invention, the water sprayed into the vacuum evaporator chamber 28 of the sub-triple-point evaporation arrangement may be a mixture of water with another liquid such as ethanol or glycol.

Whilst the charging cycle system 10 of Figure 1 and the discharging cycle systems 30 of Figures 2a and 2b have been illustrated separately, the heat exchanger 18, cold-fluid storage 20, hot-fluid storage 22 and thermal storage medium of the TEES system are common to both cycles. The desublimation evaporator 14 and the condenser 36 in the sub-triple-point evaporation arrangement 24 may be the same apparatus operated in opposing directions for the charging and discharging cycles respectively. Similarly the turbine 34 and the compressor 16 roles can be carried out by the same machinery, capable of achieving both tasks. The charging and discharging cycles may be performed consecutively, not simultaneously.

In an alternative embodiment of the sub-triple-point evaporation arrangement 24 of the present invention, a pipe may be connected directly between the evaporator 14 and the ice slurry storage tank 26 during a charging cycle. Parts of the ice building up on the evaporator which are spontaneously released or actively removed may be moved to the ice slurry storage tank 26 via said pipe.

It is noted that on the hot side of a TEES, the temperature difference between the thermal storage medium and the working fluid may be reduced using intermediate storage tanks as described in the applicant's earlier patent application EP09163084 and thereby increasing the system efficiency.

In the present embodiment, the heat exchanger is a counterflow heat exchanger, and the working fluid of the cycle is preferably carbon dioxide. Further, the thermal storage medium is a fluid, and is preferably water. In a preferred embodiment, the compressor 16 is an electrically powered compressor.

In a preferred embodiment of the present invention, the counterflow heat exchanger may have a minimal approach temperature, ΔTmin, of 3 K (ie. the minimal temperature *difference* between the two fluids exchanging heat is 3 K). The approach temperature should be as small as possible.

In the present embodiment, the evaporator 14 is a vertically oriented desublimation evaporator of the "shell and tube" type, having working fluid circulating inside of the "tubes" (referred to as conduits herein), and the water vapor on the "shell" side. Advantageously, the surface of the cooling conduits can be increased by utilizing cross sections other than circular, or by the addition of fins. The fins improve the deposition heat transfer by the increasing surface, but also by reducing the thickness of the deposited ice which builds up over a larger surface.

The preferred working fluid for circulating in the TEES system is carbon dioxide; mainly due to the higher efficiencies in heat transfer processes and the amiable properties of carbon dioxide as a natural working fluid i.e. non-flammable, no ozone depletion potential, no health hazards etc. Whilst the thermal storage medium in the hot side of the TEES system is generally water (if necessary, in a pressurized container), other materials, such as oil or molten salt, may also be used.

Thus, it is clear to the skilled person that the present invention has the following advantages; minimal system irreversibilities through gentle heat transfer due to relatively small temperature approaches, low parasitic losses as no large fans or compressors are required, and good scalability as the size of the heat exchanger on the cold side of the cycle may be decoupled from the size of the cold storage.

Importantly, the skilled person will be aware that the sub-triple point evaporative ice storage technology of the present invention can be used in various commercial applications where energy efficiency improvements and load leveling are sought. Examples include air conditioning and district cooling, gas turbine air inlet cooling, food processing, or mine cooling. This list of examples is not exhaustive.

While the invention has been illustrated and described in detail in the drawings and foregoing description, such illustration and description are to be considered illustrative or exemplary and not restrictive; the invention is not limited to the disclosed embodiments.

## Claims

1. A thermoelectric energy storage system having a charging cycle (10) for providing thermal energy to a hot thermal storage arrangement (18, 20, 22) and an evaporative ice storage arrangement (24), and a discharging cycle (30) for generating electricity by retrieving the thermal energy from the hot thermal storage arrangement (18, 20, 22) and the evaporative ice storage arrangement (24), the thermoelectric energy storage system comprising;
a working fluid circuit adapted to circulate a working fluid through the hot thermal storage arrangement (18, 20, 22) and the evaporative ice storage arrangement (24),
**characterized in that**;
the evaporative ice storage arrangement (24) comprises a heat exchanger (14, 36) coupled to an cold slurry storage tank (26) via a cold thermal storage medium circuit,
wherein
in the charging cycle system (10), the heat exchanger is adapted to function as a desublimation evaporator (14), and an evaporation chamber (28) is coupled between said desublimation evaporator (14) and the cold slurry storage tank (26) in the cold thermal storage medium circuit,
in the discharging cycle system (30), the heat exchanger is adapted to function as a condenser (36), and the cold slurry storage tank (26) is connected to said condenser (36) via the cold thermal storage medium circuit.

2. The system according to claim 1, further comprising a further heat exchanger (40) positioned in the cold thermal storage medium circuit at the outlet of said condenser (36) and an inlet of the cold slurry storage tank (26) in the discharging cycle system (30).

3. The system according to any preceding claim, wherein the heat exchanger (14, 36) and the cold slurry storage tank (26) are directly coupled together in both the charging cycle system (10) and the discharging cycle system (30).

4. The system according to any preceding claim, wherein the evaporation chamber (28) comprises a spraying device adapted to spray the cold thermal storage medium into the evaporation chamber (28) where triple point conditions are maintained.

5. The system according to any preceding claim, wherein the cold thermal storage medium is water.

6. The system according to any preceding claim, wherein the cold thermal storage medium is a mixture of water and at least one further component.

7. The system according to any preceding claim, wherein the heat exchanger (14, 36) comprises a housing containing cooling conduits and the evaporative ice storage arrangement (24) includes a periodically activated means to defrost ice from the conduits in the heat exchanger (14) in the charging cycle system (10).

8. A method for storing and retrieving electrical energy in a thermoelectric energy storage system having a hot side and a cold side, comprising;
charging the system by transferring thermal energy to a hot thermal storage medium on the hot side and to a cold thermal storage medium on the cold side,
discharging the system by retrieving thermal energy from the hot thermal storage medium and the cold thermal storage medium and transforming the thermal energy into electrical energy via mechanical energy,
wherein the step of transferring thermal energy to the cold thermal storage medium comprises;
forming ice through desublimation evaporation in an evaporative ice storage arrangement (24),
and the step of retrieving thermal energy from the cold thermal storage medium comprises;
melting the ice through condensation in the evaporative ice storage arrangement (24).

9. The method according to claim 8, wherein the step of forming ice through desublimation evaporation in an evaporative ice storage arrangement (24) includes periodically defrosting ice from the conduits in the heat exchanger (14).
